# EUROPÄISCHE PATENTSCHRIFT

(11) **EP 0 748 164 B1**
(45) Veröffentlichungstag und Bekanntmachung des Hinweises auf die Patenterteilung: **19.08.1998**
(21) Anmeldenummer: 95941721.3
(22) Anmeldetag: 18.12.1995
(51) Int. Cl.: A22B 5/20, B23D 53/12, B23D 55/08, B23D 59/00, B23Q 11/00, B23Q 11/02

(54) **BANDSÄGE ZUR ZERTEILUNG VON SCHLACHTVIEH**
BANDSAW FOR CUTTING UP CATTLE CARCASES
SCIE A RUBAN POUR DEBITER DES BETES DE BOUCHERIE

(30) Priorität: 29.12.1994 DE 4447060
(43) Veröffentlichungstag der Anmeldung: 18.12.1996
(73) Patentinhaber: FREUND Maschinenfabrik GmbH & Co. KG, 33100 Paderborn (DE)
(72) Erfinder: SEROKA, Karl-Heinz, D-33154 Salzkotten (DE); FREIMUTH, Heinrich, D-33100 Paderborn (DE)
(74) Vertreter: Hanewinkel, Lorenz, Dipl.-Phys.
(86) Internationale Anmeldenummer: EP9505004
(87) Internationale Veröffentlichungsnummer: WO9620605

(56) Entgegenhaltungen:
- DE-A- 3 336 814
- DE-A- 3 730 730
- DE-A- 4 038 513
- US-A- 4 141 142
- US-A- 4 242 798
- US-A- 4 502 184

## Beschreibung

Die Erfindung betrifft eine Bandsäge zur Zerteilung von Schlachtvieh mit einem Antriebsrad und einem im Abstand davon angeordneten Umlenkrad und einem darüber gespannten, flachliegenden, umlaufenden, zwischen den Rädern zwei Trume bildenden Sägeband, wobei ein Trum als Sägetrum dient, und das Sägeband im Bereich dieses Sägetrums beim Betrieb der Bandsäge um 90° zur Umlaufebene mit der Sägezahnung nach außen weisend verdrallt ist, und das andere, das Leertrum bildende Trum und die Räder in einem Gehäuse eingekapselt sind, in welchem ein Abflußkanal zur Ausspülung von Schmutzwasser, Sägespänen und anderen Verunreinigungen angeordnet ist.

Bandsägen zur Zerteilung von Schlachtvieh sind in verschiedenen Ausführungen bekannt. Sie werden vornehmlich zur Halbierung des Schlachtviehs eingesetzt. Beim Betrieb gelangen mit dem Sägeband meist in größerem Maße Verunreinigungen, wie Schmutzwasser oder Knochen- und Fleischsägespäne in das Gehäuse. Im Nahrungsmittelbereich werden jedoch erhöhte hygienische Anforderungen gestellt, so daß eine häufige Öffnung und zeitaufwendige Reinigung des Bandsägengehäuses notwendig ist, um das Gehäuse von innen zu reinigen.

Zur Ausspülung des in das Gehäuse eintretenden Schmutzwassers offenbart daher schon die DE-A-33 36 814 eine derartige Bandsäge mit Abflüssen an der Unterseite des Gehäuses. Diese sind in Form von Schläuchen an nach unten abklappbaren Gehäuseteilen, die die Umlenkräder nach unten verdecken, angebracht. Die Abflüsse befinden sich hierbei am tiefsten Punkt des Gehäuses. Die mit dem Sägeband in das Gehäuse hineingerissenen Schmutzreste, wie Fleisch- und Knochensägespäne, werden vom Sägeband zunächst gegen die Gehäuseinnenwände gespritzt und fließen dann langsam in Richtung Abfluß. Dabei bleiben nicht unerhebliche Reste im Gehäuse zurück. Dies ist mit den heutigen Hygienebedingungen nicht vereinbar.

Aufgabe der Erfindung ist es daher, eine Bandsäge zum Zerteilen von Schlachtvieh der eingangs genannten Art dahingehend zu verbessern, daß in einfacher und sicherer Weise eine Verunreinigung des Gehäuses mit Schmutzwasser oder Sägespänen etc. weitgehend vermieden wird, d.h. daß das Gehäuse innen möglichst von vornherein von Verschmutzungen frei bleibt.

Diese Aufgabe wird erfindungsgemäß dadurch gelöst, daß die Eintrittsöffnung des Abflußkanals hinter dem Sägetrum in Laufrichtung des Sägebandes in einem Abstand hinter der durch das Antriebs- oder das Umlenkrad verursachten, beginnenden Krümmung des Sägebandes in tangential zur Krümmung des Sägebandes verlaufender Richtung im Gehäuse liegt.

Durch die spezielle Anordnung der Eintrittsöffnung in tangentialer Richtung hinter dem Antriebs- oder Umlenkrad, werden mit dem Sägeband in das Gehäuse eindringende Verunreinigungen aufgrund ihrer Eigendynamik, d.h. aufgrund der an dem hinter dem Sägetrum befindlichen Antriebs- oder Umlenkrad entstehenden Fliehkräfte, sofort durch die Öffnung wieder herausgeschleudert, so daß der effektive Schmutzeintritt in das Gehäuse minimiert wird.

In einer besonders vorteilhaften Ausgestaltung weist der Abflußkanal eine Schwanenhalsform auf. Durch diese Ausbildung des Abflußkanales ist ein Berühren der bewegten Maschinenelemente durch den Bediener von außen nicht möglich. Andererseits kann der Querschnitt jedoch groß genug gewählt werden, so daß auch größere Verunreinigungen ausgespült werden können.

Weitere vorteilhafte Ausgestaltungen, die für eine reduzierte Verunreinigung des Gehäuse-Innenraums beim Betrieb sorgen und/oder einer einfacheren Reinigung und erhöhten Bedienersicherheit dienen, sind in den Merkmalen der Unteransprüche 2 bis 7 enthalten.

Ein Ausführungsbeispiel wird im folgenden unter Hinweis auf die beigefügten Zeichnungen beschrieben. Es stellen dar:

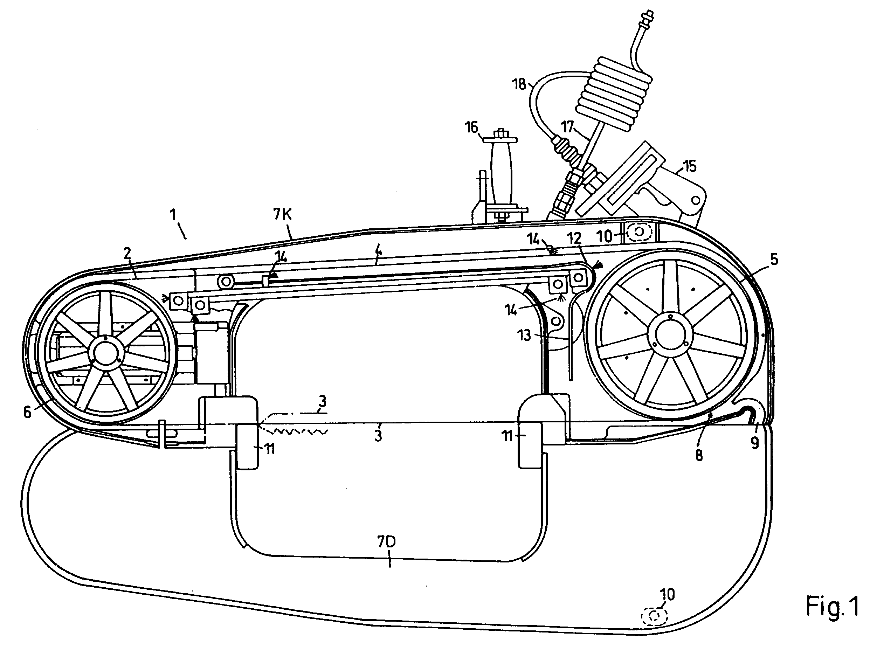

- Fig. 1: eine Seitenansicht der Säge mit aufgeklapptem Deckel,

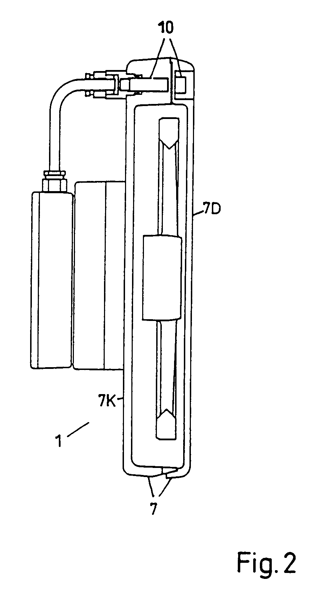

- Fig. 2: eine kopfseitige Ansicht der Bandsäge mit geschlossenem Gehäuse.

Die dargestellte Bandsäge (1) zur Zerteilung von Schlachtvieh besteht aus einem Antriebsrad (5) und einem im Abstand davon angeordneten Umlenkrad (6), sowie einem darüber gespannten, flachliegenden, umlaufenden, zwischen den Rädern (5, 6) zwei Trume (3, 4) bildenden Sägeband (2). Ein Trum dient als Sägetrum (3), das andere Trum bildet das Leertrum (4). Im Bereich des Sägetrums (3) ist das Sägeband (2) beim Betrieb der Bandsäge (1) um 90° aus der Umlaufebene mit der Sägezahnung nach außen weisend verdrallt. Der nicht direkt für die Zerlegung benutzte Teil des Sägebandes sowie die Räder (5, 6) sind in einem Gehäuse gekapselt. Hinter dem Sägetrum (3) ist in Laufrichtung des Sägebands (2) in einem Abstand hinter der durch das Antriebsrad (5) verursachten, beginnenden Krümmung (8) des Sägebands (2) in tangential zur Krümmung (8) verlaufender Richtung im Gehäuse (7) ein schwanenhalsförmiger Abflußkanal (9) zur Ausspülung von Schmutzwasser, Sägespänen und anderen Verunreinigungen angeordnet.

Das Gehäuse (7) besteht aus einem Kastenteil (7K) und einem die offene Seite des Kastenteiles (7K) verschließenden, einteiligen Deckel (7D). Am Deckel (7D) und am Kastenteil (7K) sind vor und hinter dem Sägetrum (3) Umlenkflächen (11) angeordnet, welche beim Aufsetzen des Deckels (7D) auf das Kastenteil (7K) zwangsläufig das Sägeband (2) um 90° nach außen verdrallen. Vorteilhafterweise sind diese Umlenkflächen (11) von Umlenkplatten aus Hartmetall o.ä. gebildet, welche am Deckel (7D) und Kastenteil (7K) befestigt oder angeformt sind.

Oberhalb des Antriebsrades (5) ist im Gehäuse (7) ein kontaktlos auf elektromagnetischer Basis arbeitender, verdeckt eingebauter Sensor (10) angeordnet, welcher die Position des einteiligen Deckels (7D) in Bezug zum Kastenteil (7K) kontrolliert. Durch ein Öffnen des Deckels (7D) wird die Maschine sofort ausgeschaltet. Bei geöffnetem Deckel ist ein Einschalten nicht möglich.

Der Gehäuse-Innenraum ist so ausgebildet, daß alle Flächen und Kanten, auf denen Ablagerungen entstehen können, abgeschrägt oder abgerundet sind. Zusätzlich befindet sich im Inneren des Kastenteiles (7K) eine Schottwand (13), welche alle ungünstigen Flächen und Erhebungen abdeckt. Diese Schottwand (13) verläuft auf der Innenseite in einem Abstand des Leertrums (4) entlang des Leertrums (4) und ist vor dem Antriebsrad (5) in einem schwanenhalsförmigen Bogen (12) nahezu senkrecht abgewinkelt und verläuft von dort weiter in Richtung des Sägetrums (3). Bei aufgesetztem Deckel (7D) schließt die Schottwand (13) mit dem Deckel (7D) dicht ab. Das Kastenteil (7K) bildet zusammen mit dem Deckel (7D) und der inneren Wand (13) einen glatten, geschlossenen Raum, der nur an dem Sägebandein- und -austritt, vor und hinter dem Sägetrum (3) und an dem Abflußkanal (9) geöffnet ist. Im Innenraum des Gehäuses (7) sind an verschiedenen Stellen Wasserdüsen (14) so positioniert, daß das austretende Wasser Verunreinigungen ebenfalls zum Abflußkanal (9) spült. Die Düsen dienen ebenfalls zum Einbringen von Desinfektionsmitteln.

Außerhalb des Gehäuses (7) befindet sich seitlich vom Antriebsrad (5) am Kastenteil (7K) ein Motor mit Getriebe. Am Motor ist ein schräg nach oben weisender Bügelgriff (15) mit integriertem Schalter zum Ein- und Ausschalten der Bandsäge (1) angeordnet. Seitlich des Antriebsrades (5) ist am Deckel (7D) senkrecht zur Deckeloberfläche ein Lenkergriff (nicht dargestellt) angeordnet. Ein vertikal angeordneter, zweiter Lenkergriff (16) befindet sich oberhalb des Leertrums (4) am Kastenteil (7K) in einem Abstand zum Antriebsrad (5). Wasser und Strom werden über spiralförmige oder gerade Kabel (17, 18) von oben zugeführt.

An der Bandsäge (1) ist eine Lasche (17) zum Aufhängen der Bandsäge mittels z.B. eines Federzuges angeordnet.

## Patentansprüche

1. Bandsäge (1) zur Zerteilung von Schlachtvieh mit einem Antriebsrad (5) und einem im Abstand davon angeordneten Umlenkrad (6) und einem darüber gespannten, flachliegenden, umlaufenden, zwischen den Rädern (5, 6) zwei Trume (3, 4) bildenden Sägeband (2), wobei ein Trum (3) als Sägetrum (3) dient, und das Sägeband (2) im Bereich dieses Sägetrums (3) beim Betrieb der Bandsäge um 90° zur Umlaufebene mit der Sägezahnung nach außen weisend verdrallt ist, und das andere, das Leertrum (4) bildende Trum (4) und die Räder (5, 6) in einem Gehäuse (7) eingekapselt sind, in welchem ein Abflußkanal (9) zur Ausspülung von Schmutzwasser, Sägespänen und anderen Verunreinigungen angeordnet ist, dadurch gekennzeichnet, daß die Eintrittsöffnung des Abflußkanals (9) hinter dem Sägetrum (3) in Laufrichtung des Sägebandes (2) in einem Abstand hinter der durch das Antriebs- oder das Umlenkrad (5, 6) verursachenden, beginnenden Krümmung (8) des Sägebandes (2) in tangential zur Krümmung (8) verlaufender Richtung im Gehäuse (7) liegt.

2. Bandsäge nach Anspruch 1, dadurch gekennzeichnet, daß der Abflußkanal (9) eine Schwanenhalsform aufweist.

3. Bandsäge nach Anspruch 1 oder 2, dadurch gekennzeichnet, daß das Gehäuse (7) aus einem Kastenteil (7K) und einem, die offene Seite des Kastenteils (7K) verschließenden, einteiligen Deckel (7D) besteht.

4. Bandsäge nach Anspruch 3, dadurch gekennzeichnet, daß am Deckel (7D) und am Kastenteil (7K) vor und hinter dem Sägetrum (3) beim Aufsetzen des Deckels (7D) auf das Hastenteil (7K) zwangsläufig das Sägeband (2) um 90° verdrallende Umlenkflächen (11) angeordnet sind.

5. Bandsäge nach einem der vorstehenden Ansprüche 3 oder 4, dadurch gekennzeichnet, daß im Gehäuse (7) ein kontaktlos auf elektromagnetischer Basis arbeitender, die Position des Deckels (7D) in Bezug zum Kastenteil (7K) abfragender Sensor (10) angeordnet ist.

6. Bandsäge nach einem der vorstehenden Ansprüche 3 bis 5, dadurch gekennzeichnet, daß im Inneren des Hastenteiles (7K) eine auf der Innenseite in einem Abstand des vom Sägeband (2) gebildeten Leertrum (4) entlang des Leertrums (4) verlaufende und vor dem Antriebsrad (5) in einem schwanenhalsförmigen Bogen (12) nahezu senkrecht abgewinkelte, vom Leertrum (4) in Richtung des Sägetrums (3) verlaufende, das Sägeband (2) und mindestens ein Rad (5, 6) von den übrigen im Gehäuse (7) befindlichen mechanischen Teilen abtrennende, mit dem Deckel (7D) dicht abschließende Schottwand (13) angeordnet ist.

7. Bandsäge nach einem der vorstehenden Ansprüche 3 bis 6, dadurch gekennzeichnet, daß im Hastenteil (7K) mindestens eine, vorzugsweise mehrere, im Gehäuse (7) befindliche Verunreinigungen mittels Wasserdruck aus dem Abflußkanal (9) herausspülende Wasserdüse (14) angeordnet ist.

## Claims

1. Band saw (1) for cutting up animal carcasses, comprising a driving wheel (5) and arranged at a distance therefrom a deflecting wheel (6) and stretched flat above them and around them a saw band (2) forming two sides 3, 4) of a belt between the wheels (5, 6), with one side (3) of the belt acting as the sawing belt side (3), and when the band saw is in operation the saw band (2) in the vicinity of the said sawing belt side (3) is twisted through 90° to the plane of revolution so that its saw teeth arrangement faces outwards, and the other belt side (4), which forms the loose side (4) of the belt, and the wheels (5, 6), are encapsulated in an enclosure (7) in which a drainage duct (9) is disposed for flushing out dirty water, carcass shavings and other debris, characterised in that the inlet opening of the drainage duct (9) is situated in the enclosure (7), behind the sawing side (3) of the belt in the direction in which the saw band (2) runs, and is set at a distance behind the point where the curvature (8) of the saw band (2) begins as a result of the driving or deflecting wheel (5, 6), in a direction extending tangentially to the curvature (8).

2. Band saw according to claim 1, characterised in that the drainage duct (9) is in the shape of a swan neck.

3. Band saw according to claim 1 or 2, characterised in that the enclosure (7) consists of a box element (7K) and a one-part lid (7D) which seals the open face of the box element (7K).

4. Band saw according to claim 3, characterised in that disposed on the lid (7D) and on the box element (7K), to the front and rear of the sawing side (3) of the belt, there are deflecting faces (11) which forcibly twist the saw band (2) through 90° when the lid (7D) is placed onto the box element (7K).

5. Band saw according to either of the preceding claims 3 or 4, characterised in that disposed in the enclosure (7) there is a sensor (10) which operates electromagnetically in a contact-free manner and senses the position of the lid (7D) in relation to the box element (7K).

6. Band saw according to any of the preceding claims 3 to 5, characterised in that disposed inside the box element (7K) there is a bulkhead (13) which extends on the inner face along the loose side (4) of the belt at a distance from the loose side (4) of the belt formed by the saw band (2), and which extends in front of the driving wheel (5) in a swan-necked curve (12) bent at virtually a perpendicular angle, from the loose side (4) of the belt towards the sawing side (3) of the belt, and which separates the saw band (2) and at least one wheel (5, 6) from the remainder of the mechanical parts contained in the enclosure (7), and which seals tightly with the lid (7D).

7. Band saw according to any of the preceding claims 3 to 6, characterised in that disposed in the box element (7D) there is at least one, preferably more than one, water nozzle (14) which by means of water pressure flushes away debris out of the drainage duct (9) from inside the enclosure (7).

## Revendications

1. Scie à ruban (1) pour débiter des bêtes de boucherie, laquelle comporte une poulie d'entraînement (5), et une poulie de renvoi (6), disposée à distance de la poulie d'entraînement (5) et un ruban (2) de scie, tendu au-dessus d'elles, lequel, tournant à plat, forme, entre les poulies (5, 6), deux secteurs (3, 4), dont l'un forme la partie de sciage (3), le ruban (2) compris dans cette zone (3) étant torsionné de 90° par rapport au niveau de révolution, avec la denture dirigée vers l'extérieur, lorsque la scie est en service, et l'autre secteur, qui forme la partie libre, de non sciage (4), et les roues (5, 6) étant capsulés dans un boîtier (7), dans lequel est disposé un canal d'écoulement (9) pour eau sale, copeaux et autres impuretés et débris,
caractérisée en ce que
l'ouverture d'entrée du canal d'écoulement (9) est située, dans le boîtier (7), tangentiellement par rapport à la courbe (8), à distance et en aval, dans le sens de marche du ruban, du début de la courbe (8) infligée au ruban (2) par la poulie d'entraînement ou la poulie de renvoi (5, 6).

2. Scie à ruban selon la revendication 1,
caractérisée en ce que
le canal d'écoulement (9) présente la forme d'un col de cygne.

3. Scie à ruban selon la revendication 1 ou 2,
caractérisée en ce que
le boîtier (7) est composé d'une partie en forme de caisse (7K) et d'un couvercle (7D) formé d'une pièce, lequel ferme le côté ouvert de la caisse (7K).

4. Scie à ruban selon la revendication 3,
caractérisée en ce que
le couvercle (7D) et la caisse (7K) sont équipés de déflecteurs (11) qui, disposés en amont et en aval du secteur de sciage (3) tourne coercitivement le ruban (2) de 90° lorsque le couvercle (7D) est mis en place sur la caisse (7K).

5. Scie à ruban selon l'une des revendications 3 ou 4,
caractérisée en ce qu'
un détecteur (10) sans contacts, travaillant électromagnétiquement et détectant la position du couvercle (7D) par rapport à la caisse (7K) est installé dans le boîtier (7).

6. Scie à ruban selon l'une des revendications 3 à 5,
caractérisée en ce qu'
une cloison (13) est prévue à l'intérieur de la caisse (7K), laquelle cloison (13) est disposée à distance et le long du secteur libre (4) du ruban (2), côté intérieur, et, formant un col de cygne (12) en amont de la poulie d'entraînement (5), s'étend presque verticalement à partir du secteur libre (4), en direction du secteur de sciage (3) tout en séparant le ruban (2) de scie et, au moins, une poulie (5, 6) du reste des éléments mécaniques logés dans le boîtier (7) et se termine hermétiquement par rapport au couvercle (7D).

7. Scie à ruban selon l'une des revendications 3 à 6,
caractérisée en ce qu'
au moins une buse d'injection d'eau (14), de préférence plusieurs, est disposée dans la caisse (7K) et, sous pression hydraulique, chasse, par le canal d'écoulement (9) les déchêts et impuretés se trouvant dans le boîtier (7).
